# EUROPEAN PATENT SPECIFICATION

(11) **EP 2 966 242 B1**
(45) Date of publication and mention of the grant of the patent: **19.04.2017**
(21) Application number: 15175730.9
(22) Date of filing: 07.07.2015
(51) Int. Cl.: E04H 3/22, G03B 37/00, G03B 21/00

(54) **INFORMATION SYSTEM**
INFORMATIONSSYSTEM
SYSTÈME D'INFORMATION

(30) Priority: 10.07.2014 NL 2013162
(43) Date of publication of application: 13.01.2016
(73) Proprietor: Inno Projects B.V., 6461 MA Kerkrade (NL)
(72) Inventor: Gubbels, Johannes Hermanus Maria, 6014 AT ITTERVOORT (NL)
(74) Representative: Grootscholten, Johannes A.M.

(56) References cited:
- WO-A2-99/56173
- CA-A1- 2 371 501
- DE-A1- 1 434 669
- DE-A1- 19 628 455
- FR-A1- 2 443 862
- US-A1- 2010 300 006

## Description

The present disclosure relates to an information system, comprising a structure; and a large projection or transmission element accommodated inside the structure.

Such information systems are known, wherein seats are arranged underneath a projection or transmission dome, onto which projectors may be oriented from the outside or the inside of the dome, and people, sitting in the chairs, are presented with a movie or the like, which is displayed onto an inward oriented surface of the dome overhead. Examples of such information systems are, for instance, the I-max system and the like. Further, reference is made here to US-2010/300006, DE-1434669, CA-2371501, and WO-99/56173, all of which disclose similar known systems that allow people to watch an inward oriented surface of the projection or transmission dome.

Such known systems allow for more sense of involvement of the people sitting in the chairs under the projection or transmission dome than in even more conventional settings with chairs horizontally facing a flat and vertical projection screen, because things are happening all around spectators when viewing the inside surface of a projection or transmission dome. However, the present disclosure is aimed at providing a further enhanced information system that allows people to experience a further enhanced sense of involvement with the information being displayed on the projection or transmission element.

To this end, the present disclosure proposes to provide an information system according to claim 1.

In an information system according to the present disclosure, people being confronted with a display of information or content on the projection or transmission element, will be more involved with the content on display. For instance with a globally or spherically curved projection or transmission element, people experience a sense of looking back on earth from outer space. This is achieved through the relative positioning of the components of the information system. In particular if the content on display relates to, for instance, parts of the Earth's surface, people tend to be less earthbound and more open minded than when sitting down and looking up and feeling restrained and earthbound, as a consequence of the fact that they could be standing up and looking down on our planet. Also for other content on display, the dissociative effect of the component arrangement according to the present disclosure results in a more open minded approach to the content on display.

The present disclosure relates to a number of preferred embodiments, some of which are defined in dependent claims in the appended set of claims, and/or will be described and disclosed in the below embodiment description, in which reference is made to the appended drawing. Neither preferred embodiments in the dependent claims, nor such embodiments in the below figure description are to be interpreted as limitations on the scope of protection according to the present disclosure.

For example, in an embodiment, the information system according to the present disclosure can be such that the projection or transmissions element is curved. As such a curved projection or transmission element is known, but according to the present disclosure the relative positioning is novel, and people would be looking at a different side of the projection or transmission element than in any prior art configuration. In particular and as indicated above. The system with a curved projection or transmission element can be such that the projection or transmission element is curved in correspondence with the Earth to emulate an astronaut's view on Earth.

In an additional or alternative embodiment, the information system according to the present disclosure may be such that the projection or transmissions element has a sphere cut shape or a spherical section. Such a shape may differ from the Earth's shape, but still enhance the content on display through the curved nature of the projection or transmission element, and because of the dissociative effect of the novel component arrangement relative to the prior art.

In a further additional or alternative embodiment, the information system according to the present disclosure may be such that the large projection or transmission element has a diameter of at least 5 meter, preferably at least 10 meter and more preferably at least 15 meter, for example 16 meter.

In an additional or alternative embodiment, the information system according to the present disclosure may be such that the large projection or transmission element has a height of at least 3 meter, preferably at least 5 meter, more preferably at least 7 meter, for example 8 meter.

Such dimensions contribute to the overwhelming effect on people being confronted with display of content onto the projection or transmission element.

In an additional or alternative embodiment, the information system according to the present disclosure may comprise two or more observation decks, which are arranged at different shortest distances to the projection or transmissions element. Thus the effects of the configuration according to the present disclosure may be made to differ for the different levels, altitudes or relative positions of the observation decks, to further increase the versatility of the information system according to the present disclosure.

In an additional or alternative embodiment, the information system according to the present disclosure may be such that the observation deck is made of transparent material. Such a feature will contribute to the dissociative effect of the configuration.

In an additional or alternative embodiment, the information system according to the present disclosure may be such that at least one projector is arranged behind the projection or transmission element, relative to the observation deck. Alternatively or additionally at least one projector may be arranged at the side of the observation deck, relative to the projection or transmission element. These are very suitable positions of the projectors.

In an additional or alternative embodiment, the information system according to the present disclosure may be such that the structure comprising at least one entrance or exit at a height corresponding with the observation deck. Consequently, people entering the structure are immediately enveloped in the dissociative atmosphere of the internal configuration of the information system and the structure thereof.

In an additional or alternative embodiment, the information system according to the present disclosure may be such that the structure comprises at least one of an exhibition space, for example underneath the projection or transmission element at a subterranean level; and an amphitheatre, for example above a space accommodating the projection or transmission element. Thereby the total structure and system may be more multi-functional.

In an additional or alternative embodiment, the information system according to the present disclosure may be such that the projection or transmission element is curved and oriented with a concave side thereof directed upward towards the observation deck. Such a configuration allows for diverse optical effects to be included in the presentation of content to people, for example to present images reflected off the concave side to generate an effect of visualisation of a curved surface, for example the Earth's surface, at a height above the actual concave surface of the projection or transmission element. In such an embodiment, the information system may be such that at least one projector is arranged at a side of the projection or transmission element and oriented on the concave side thereof. Such a configuration of components allows for generation of the desired optical effects and simultaneously allow for the projectors to remain out of sight of people on the observation deck there above.

Further, in an additional or alternative embodiment, the information system according to the present disclosure may comprise a control for display onto the projection or transmission element, where the control is connected with or comprises a big data visualisation system. A big data visualisation system may employ big data of a demographic, economical, and/or social nature, or of any other type, shape or form. Normally big data systems can be employed to generate predictions and/or provide insight into how and why specific processes develop in the way that they do. Visualisation thereof in particular in the context of the configuration according to the present disclosure allows for adaptation of parameters or the like in or of the predictions based on the big data, and visualisation of the effects thereof on the manner or way in which these processes develop enables far reaching experiments to be conducted in the framework of the present disclosure, in conjunction with the big data visualisation.

Below, some potential embodiments of the present disclosure are presented through reference to the accompanying drawing. Neither preferred embodiments in the dependent claims, nor such embodiments in the below figure description are to be interpreted as limitations on the scope of protection according to the present disclosure. In the appended drawing,
Figure 1 shows a partly cut away perspective view of an embodiment of an information system according to the present disclosure;
Figure 2 schematically represents another embodiment having a different shape of the structure;
Figure 3 shows a cross sectional view of an alternative embodiment;
Figure 4 shows a detail of a portion of the system of Figure 3; and
Figure 5 shows a schematic representation of an audio-visual system, that could be employed in or with an information system according to the present disclosure.

In figures representing distinct embodiments, the same or similar reference numbers may be employed for similar elements, components or features.

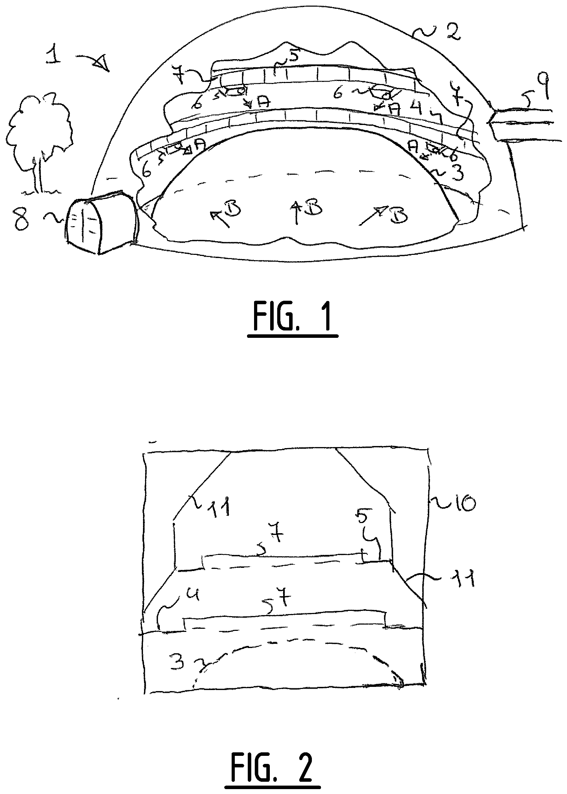

Figure 1 shows an information system 1 comprising a dome shaped structure 2, which is represented in partially cut away sectional view to exhibit a curved, sphere sectional projection/transmission screen 3 forming the projection or transmission element, two balconies 4, 5 forming observation decks, and projectors 6 suspended from the balconies 4, 5 to project images, movies or graphic content in general in the direction of arrows A onto the screen 3. Further or as an alternative for the projectors on the balconies 4, 5, projectors may be provided in the interior of the dome shaped screen 3, hidden from sight and consequently not shown in Figure 1, to display graphic material onto the dome shaped screen 3 on the basis of transmission, in the direction of arrows B.

Balconies 4, 5 are made of transparent material. These have railings or balustrades 7 for the safety of people visiting the information system. Preferably railings or balustrades 7 are transparent like the balconies 4, 5. Balconies 4, 5 are at distinct heights in the structure 2, and/or at different shortest distances to the dome shaped screen 3. Balconies 4, 5 are inside the structure 2, and outside a space defined by dome shaped screen 3, so that from the balconies spectators can look down onto screen 3. This is in marked contrast with the prior art configurations, like I-max, where spectators are under a dome shaped screen, looking up at an inward oriented display surface.

The structure 2 may have one or more than one entrance / exit, or even separate entrance(s) and exit(s). In the configuration of Figure 1, the structure comprises an entrance and/or exit 8 at ground level and another entrance and/or exit 9 at a height above ground level and more in particular at the level of one of the balconies 4, 5.

Figure 2 is an example of an information system having a structure 10 with a more rectangular structure. It also comprises balconies 4, 5 and balustrades 7. The dome shaped screen 3 is at the base of the structure 10. In the interior of the structure 10, oblique walls 11 are provided for acoustic reasons. for a skilled person in the field of acoustics, the shape, position and orientation of such oblique walls will pose no problem to be determined.

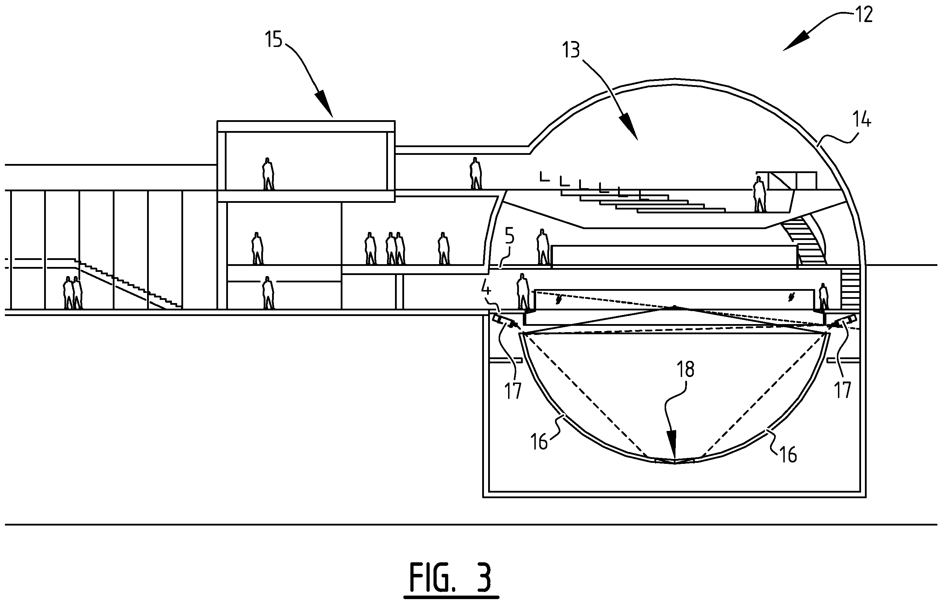

Figure 3 shows another embodiment of an information system 12, with a dome shaped structure 14 comprising an amphitheatre 13 in the upper side of the dome shape of the structure 14. Exhibition space 15 can be provided, for example underneath the projection or transmission element at a subterranean level. In the embodiment of Figure 3 exhibition space is provided to a side of the structure 14.

The embodiment of Figure 3 further comprises a different embodiment of the projection or transmission element which is here formed by dome shaped screen 16, of which a concave side 18 is oriented upward. Projectors 17 are arranged at an upper level of the screen 16 to project graphics over the edge of the screen 16. With appropriately mastered optical effects, the optical impression of a globe can be provided to people on the balconies 4, 5, whereby the globe would seems to curve under their feet on the transparent balconies 4 or 5.

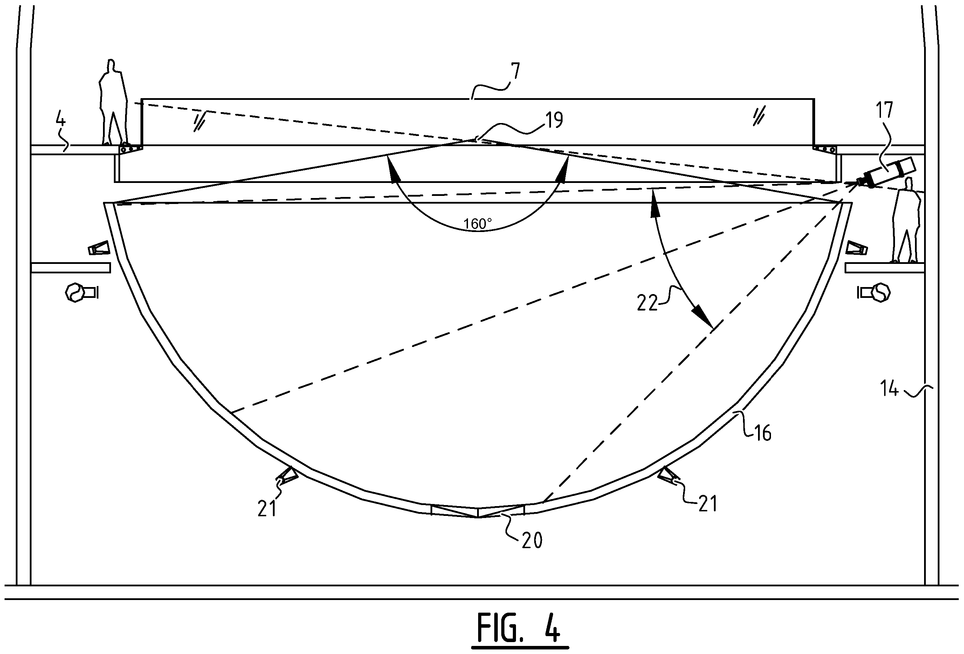

Figure 4 shows a portion of figure 3 in more detail, from which the optical function of the assembly with the inverted dome shape of screen 16 relative to the orientation of Figure 1 should be self-evident. Slightly above the screen 16, a projection centre 19 is defined in relation to the position of on-looking people on balcony 4. With such a configuration, a true-to-life visualisation of, for example, the Earth's globe can be presented to the people on-looking from the balconies 4, 5.

Further, an access door 20 to the dome shape screen 16 is shown, as well as the provision of speakers 21, which contribute to the multimedia based audio-visual experience of on-looking people.

In addition to the single projector 17 shown in figure 4, the system should comprise more than one projector, to each generate a projection beam indicated at 22. With appropriate dimensioning of the projection beams 22 from individual projectors 17, any desired optical effect can be achieved, which is well within the reach of any skilled person after having been confronted with the present disclosure.

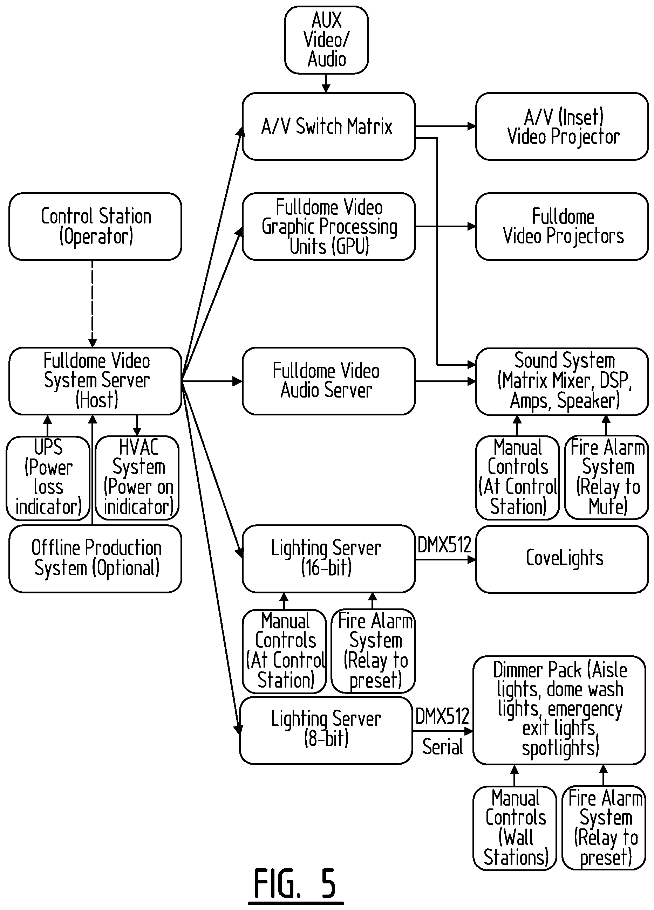

Figure 5 shows an exemplary control configuration for controlling Audio-Visual system, and potentially also other system components, such as air conditioning, lighting and the like. Figure 5 is self-explanatory to the skilled person and provided here only by way of example, to clarify that a central control may be desired for the control of or over more than just the AV system components.

Further, it is noted here that the information system according to the present disclosure may comprise a control for display onto the projection or transmission element, where the control is connected with or comprises a big data visualisation system. Such a big data system can form a source of visual information, when loaded with appropriate analysis software or the like, to perform computation or the like based on appropriate algorithms and the like to arrive at predictions about the development of specific processes and how these are influenced by adaptation of particular parameters or the like, related to such processes. Big Data are raw and unstructured data, the usefulness is often not known beforehand (i.e. before processing the data). By processing these raw unstructured data, through combining, structuring, organising and visualising, valuable information may appear, that can contribute to the efforts of civilians, companies, organisations and even (portions of a) government. By this processing, Big Data is made accessible and understandable, even for a greater public, like people of arbitrary background visiting the present information system.

As indicated above, images are displayed onto the screen 3 or the concave side 18 of dome shaped screen 16. The images may include movies. Additionally, information with respect to such images or movies may be displayed, with the images and movies, or in isolation. Such information may be accessed through the aforementioned big data visualisation system, or through any arbitrary storage of sufficient data to display desired information.

The system according to the present disclosure may comprise input elements or interaction apparatuses. Input elements or interaction apparatuses may be fixed to a balustrade 7 of a balcony 4, 5, or may be portable. Such input elements may comprise any one of the apparatuses from a group, comprising tablet computers, mobile phones, keyboards, mouses, headsets, electronic goggles or glasses, and any other conceivable element or apparatus that may communicate with a control system, which determines which or what images, movies, and/or information is actually to be displayed. In some cases, display of requested images, movies and/or information may even be transferred to the input elements or interaction apparatuses.

Even visitor's own tablet computers and/or mobile phones may be loaded with apps configured for the task of communication with the control system for the visitors to be able to influence the display of images, movies and/or information, and thus establish a true form of interactive communication between the visitors, their communication devices and the control system and information system according to the present disclosure. Fixed apparatuses may have the advantage that the amount of communication requests from visitors may be kept manageable, and prevent theft. Managing information requests may comprises prioritizing the request form visitors and sequentially processing the requests, or the control system may seek a logical progression in processing the requests in that related issues, images movies and/or information requested to be displayed may be sought, even if some requests are thereby necessarily disregarded. Disregarded requests for images, movies and/or information may be transferred to the input elements or interaction apparatuses, if equipped with display screens, such as tablet computers, mobile phones or fixedly arranged touch screen and the like, where such transfer - as indicated above - may be used to visualise the requested images, movies and/or other information on the input elements or interaction apparatuses instead of on the big screen 3 or 16, to satisfy the curiosity for information of specific users or visitors, of whom requests have not led to display on the big screen 3 or 16.

Input elements or interaction apparatuses may have interactive display screens also for the input of requests, for instance by displaying graphic user interfaces. In these and possibly also arbitrary other manners, parameters related to displayed movies, images and information may be altered by visitors, for example to change a course of events, that can be simulated for the visitors, for example by way of experiment, to examine effects when specific parameters are altered. For example, a visitor could be enabled to change a rate at which the earth's human population grows per decade, to examine the effects on poverty and hunger in the world, based in demographic data in the big data system. The results of such simulations could be displayed graphically on the screen 3 or 16, for example by colouring regions of the Earth, where poverty and famine are expected to rise in an alarm colour, such as red, as a function of the visitor selected rate of growth of the Earth's human population.

Such graphic user interfaces for visitors to manipulate may comprise slides and shifting bars, as well as or as an alternative for numerical input possibilities.

If a number of visitors exceeds a predetermined threshold at any given time, the control system may be configured to limit the amounts of inputs in general, from the number of input elements or interaction apparatuses, per unit of time, or as a function of time needed to complete display of a display of images, movies and/or information based upon previous requests, and/or any other of establishing an order for displaying requested images, movies, and/or other information, like simulations. Also or alternatively, the above mentioned manners of prioritisation may be employed. Further, the system may be configured to generate a selection of parameters, that the visitor may be invited to alter, depending on a (recent) history of simulations, to allow the simulations to progress in a natural order. For example, the system may be configured to ask the visitors whether they would want to know what the influence of an outbreak or epidemic of a highly contagious and extremely life threatening disease, like ebola, would be on the generated projections and simulations.

It should be self-evident that many adaptations, variants and embodiments are possible within the framework of the present disclosure, without departing from the basic concept of the present disclosure as defined in the appended independent claim. For instance, the nature, shape and form of the structure do not matter, and the structure could even be open, merely to accommodate the projection and/or transmission element. The projection and/or transmission element could be reflective, and/or have any other shape than sphere sectional. Thus it is immediately evident that the terms and features in the definition of the scope of protection according to the appended independent claim 1 and potential similar or equivalent aspects are included in the scope of protection as well.

## Claims

1. Information system (1), comprising
- a structure (2,14);
- a large projection or transmission element (3,16), wherein
- the large projection or transmission element (3,16) is accommodated inside the structure (2,14); and
- the information system comprises at least one observation deck (4,5) which is oriented at the projection or transmission element, **characterised in that** the observation deck (4,5) is also arranged inside the structure (2,14) between the structure and the large projection or transmission element (3,16) wherein a viewing surface (18) of the projection or transmission element (3,16) is outward oriented relative to the structure and towards the observation deck (4,5).

2. Information system according to claim 1, wherein the projection or transmission element (16) is curved.

3. Information system according to claim 2, wherein the projection or transmission element (16) is curved in correspondence with the Earth to emulate an astronaut's view on Earth.

4. Information system according to claims 1, 2 or 3, wherein the projection or transmissions element (16) has a sphere cut shape or a spherical section.

5. Information system according to any one or more than one of the preceding claims, wherein the large projection or transmission element (16) has a diameter of at least 5 meter, preferably at least 10 meter and more preferably at least 15 meter, for example 16 meter.

6. Information system according to any one or more than one of the preceding claims, wherein the large projection or transmission element (16) has a height of at least 3 meter, preferably at least 5 meter, more preferably at least 7 meter, for example 8 meter.

7. Information system according to any one or more than one of the preceding claims, comprising two or more observation decks (4,5), which are arranged at different shortest distances to the projection or transmissions element (16).

8. Information system according to any one or more than one of the preceding claims, wherein the observation deck (4,5) is made of transparent material.

9. Information system according to any one or more than one of the preceding claims, wherein at least one projector (17) is arranged behind the projection or transmission element (16) relative to the observation deck (4,5)

10. Information system according to any one or more than one of the preceding claims, wherein at least one projector (17) is arranged at the side of the observation deck (4,5), relative to the projection or transmission element (16).

11. Information system according to any one or more than one of the preceding claims, wherein the structure comprising at least one entrance or exit (8,9) at a height corresponding with the observation deck (4,5).

12. Information system according to any one or more than one of the preceding claims, wherein the structure comprises at least one of an exhibition space (15), for example underneath the projection or transmission element (16) at a subterranean level or to a side of the structure; and an amphitheatre (13), for example above a space accommodating the projection or transmission element (16).

13. Information system according to any one or more than one of the preceding claims, wherein the projection or transmission element (16) is curved and oriented with a concave side thereof directed upward towards the observation deck.

14. Information system according to claim 13, wherein at least one projector is arranged at a side of the projection or transmission element and oriented on the concave side (18) thereof.

15. Information system according to any one or more than one of the preceding claims, comprising a control for display onto the projection or transmission element (16), where the control is connected with or comprises a big data visualisation system.

## Patentansprüche

1. Informationssystem (1), das aufweist:
- eine Struktur (2, 14);
- ein großes Projektions- oder Transmissionselement (3, 16),
wobei
- das große Projektions- oder Transmissionselement (3, 16) im Inneren der Struktur (2, 14) aufgenommen ist; und
- das Informationssystem wenigstens eine Aussichtsplattform (4, 5) aufweist, die an dem Projektions- oder Transmissionselement orientiert ist, **dadurch gekennzeichnet, dass** die Aussichtsplattform (4, 5) auch im Inneren der Struktur (2, 14) zwischen der Struktur und dem großen Projektions- oder Transmissionselement (3, 16) angeordnet ist, wobei eine Betrachtungsoberfläche (18) des Projektions- oder Transmissionselements (3, 16) relativ zu der Struktur nach außen und in Richtung der Aussichtsplattform (4, 5) orientiert ist.

2. Informationssystem nach Anspruch 1, wobei das Projektions- oder Transmissionselement (3, 16) gekrümmt ist.

3. Informationssystem nach Anspruch 2, wobei das Projektions- oder Transmissionselement (16) entsprechend der Erde gekrümmt ist, um eine Sicht eines Astronauten auf die Erde nachzubilden.

4. Informationssystem nach den Ansprüchen 1, 2 oder 3, wobei das Projektions- oder Transmissionselement (16) eine Kugelschnittform oder einen kugelförmigen Abschnitt hat.

5. Informationssystem nach Anspruch einem oder mehreren der vorhergehenden Ansprüche, wobei das große Projektions- oder Transmissionselement (16) vorzugsweise einen Durchmesser von mindestens 5 Meter, bevorzugt mindestens 10 Meter und bevorzugter mindestens 15 Meter, zum Beispiel 16 Meter, hat.

6. Informationssystem nach Anspruch einem oder mehreren der vorhergehenden Ansprüche, wobei das große Projektions- oder Transmissionselement (16) eine Höhe von mindestens 3 Meter, bevorzugt mindestens 5 Meter, bevorzugter mindestens 7 Meter, zum Beispiel 8 Meter, hat.

7. Informationssystem nach Anspruch einem oder mehreren der vorhergehenden Ansprüche, das zwei oder mehr Aussichtsplattformen (4, 5) hat, die in verschiedenen kürzesten Entfernungen von dem Projektions- oder Transmissionselement (16) eingerichtet sind.

8. Informationssystem nach Anspruch einem oder mehreren der vorhergehenden Ansprüche, wobei die Aussichtsplattform (4, 5) aus transparentem Material hergestellt ist.

9. Informationssystem nach Anspruch einem oder mehreren der vorhergehenden Ansprüche, wobei wenigstens ein Projektor (17) relativ zu der Aussichtsplattform (4, 5) hinter dem Projektions- oder Transmissionselement (16) eingerichtet ist.

10. Informationssystem nach Anspruch einem oder mehreren der vorhergehenden Ansprüche, wobei der wenigstens eine Projektor (17) relativ zu dem Projektions- oder Transmissionselement (16) auf der Seite der Aussichtsplattform (4, 5) eingerichtet ist.

11. Informationssystem nach Anspruch einem oder mehreren der vorhergehenden Ansprüche, wobei die Struktur mindestens einen Eingang oder Ausgang (8, 9) auf einer Höhe aufweist, die der Aussichtsplattform (4, 5) entspricht.

12. Informationssystem nach Anspruch einem oder mehreren der vorhergehenden Ansprüche, wobei die Struktur einen Vorführungsraum (15), zum Beispiel unterhalb des Projektions- oder Transmissionselements (16) auf einer unterirdischen Ebene oder auf einer Seite der Struktur; und eine Arena, zum Beispiel oberhalb eines Raums, der das Projektions- oder Transmissionselement (16) aufnimmt, aufweist.

13. Informationssystem nach Anspruch einem oder mehreren der vorhergehenden Ansprüche, wobei das Projektions- oder Transmissionselement (16) gekrümmt und mit seiner konkaven Seite nach oben in Richtung der Aussichtsplattform gerichtet orientiert ist.

14. Informationssystem nach Anspruch 13, wobei mindestens ein Projektor auf einer Seite des Projektions- oder Transmissionselements eingerichtet und auf dessen konkave Seite (18) orientiert ist.

15. Informationssystem nach Anspruch einem oder mehreren der vorhergehenden Ansprüche, das eine Steuerung für die Anzeige auf dem Projektions- oder Transmissionselement (16) aufweist, wobei die Steuerung mit einem großen Datenvisualisierungssystem verbunden ist oder dieses aufweist.

## Revendications

1. Système d'information (1), comprenant :
- une structure (2,14) ;
- un grand élément de projection ou de transmission (3,16),
dans lequel
- le grand élément de projection ou de transmission (3,16) est logé à l'intérieur de la structure (2,14) ; et
- le système d'information comprend au moins un pont d'observation (4,5) qui est orienté au niveau de l'élément de projection ou de transmission, **caractérisé en ce que** le pont d'observation (4,5) est également agencé à l'intérieur de la structure (2,14) entre la structure et le grand élément de projection ou de transmission (3,16) dans lequel une surface de visualisation (18) de l'élément de projection ou de transmission (3,16) est orientée vers l'extérieur relativement à la structure et vers le pont d'observation (4,5).

2. Système d'information selon la revendication 1, dans lequel l'élément de projection ou de transmission (16) est incurvé.

3. Système d'information selon la revendication 2, dans lequel l'élément de projection ou de transmission (16) est incurvé en correspondance avec la Terre pour imiter la vue d'un astronaute sur la Terre.

4. Système d'information selon les revendications 1, 2 ou 3, dans lequel l'élément de projection ou de transmission (16) a une forme de sphère coupée ou une section sphérique.

5. Système d'information selon au moins l'une quelconque des revendications précédentes, dans lequel le grand élément de projection ou de transmission (16) a un diamètre d'au moins 5 mètres, de préférence d'au moins 10 mètres et de manière plus préférée d'au moins 15 mètres, par exemple 16 mètres.

6. Système d'information selon au moins l'une quelconque des revendications précédentes, dans lequel le grand élément de projection ou de transmission (16) a une hauteur d'au moins 3 mètres, de préférence d'au moins 5 mètres, d'une manière davantage préférée d'au moins 7 mètres, par exemple 8 mètres.

7. Système d'information selon au moins l'une quelconque des revendications précédentes, comprenant deux ponts d'observations ou plus (4,5), qui sont agencés à de différentes distances les plus courtes de l'élément de projection ou de transmission (16).

8. Système d'information selon au moins l'une quelconque des revendications précédentes, dans lequel le pont d'observation (4,5) est fait d'un matériau transparent.

9. Système d'information selon au moins l'une quelconque des revendications précédentes, dans lequel au moins un projecteur (17) est agencé derrière l'élément de projection ou de transmission (16) relativement au pont d'observation (4,5).

10. Système d'information selon au moins l'une quelconque des revendications précédentes,
dans lequel au moins un projecteur (17) est agencé sur le côté du pont d'observation (4,5), relativement à l'élément de projection ou de transmission (16).

11. Système d'information selon au moins l'une quelconque des revendications précédentes,
dans lequel la structure comprend au moins une entrée ou une sortie (8,9) à une hauteur correspondant au pont d'observation (4,5).

12. Système d'information selon au moins l'une quelconque des revendications précédentes,
dans lequel la structure comprend au moins un parmi un espace d'exposition (15), par exemple en dessous de l'élément de projection ou de transmission (16) à un niveau souterrain ou sur un côté de la structure ; et
un amphithéâtre (13), par exemple au-dessus d'un espace logeant l'élément de projection ou de transmission (16).

13. Système d'information selon au moins l'une quelconque des revendications précédentes,
dans lequel l'élément de projection ou de transmission (16) est incurvé et orienté avec un côté concave dirigé vers le haut en direction du pont d'observation.

14. Système d'information selon la revendication 13, dans lequel au moins un projecteur est agencé sur un côté de l'élément de projection ou de transmission et orienté sur le côté concave (18) de celui-ci.

15. Système d'information selon au moins l'une quelconque des revendications précédentes,
comprenant une commande aux fins d'affichage sur l'élément de projection ou de transmission (16), où la commande est connectée à un vaste système de visualisation de données ou comprend un tel système.
